# EUROPEAN PATENT APPLICATION

(11) **EP 1 058 223 A1**
(43) Date of publication of application: **06.12.2000**
(21) Application number: 99954542.9
(22) Date of filing: 19.07.1999
(51) Int. Cl.: G09B 19/06

(54) **METHOD FOR TEACHING FOREIGN LANGUAGES AND METHOD FOR BUILDING-UP A LEXICAL BACKGROUND**

(30) Priority: 21.07.1998 RU 98113802; 21.07.1998 RU 98113844; 21.07.1998 RU 98113845; 21.07.1998 RU 98113847
(71) Applicant: Zotova, Tatiyana Vladimirovna, Moscow 115470 (RU)
(72) Inventor: Zotova, Tatiyana Vladimirovna, Moscow 115470 (RU)
(74) Representative: Patentanwälte Zellentin & Partner
(86) International application number: RU9900240
(87) International publication number: WO0005697

(57) **Abstract**

The present invention relates to a method for teaching foreign languages that comprises showing to the students a plurality of colour demonstration systems in which all basic words are indicated in black or blue, while distinct words or parts thereof are indicated in green and new words are indicated in red. An assistant checks on the work carried out by the students on their own and indicates in red the approximate location of a mistake, wherein the student corrects said mistake himself and also in red. The students also reproduce in colour the information which is displayed in the demonstration systems. During a spoken examination, all students examined answer simultaneously by predetermined gestures, mimics or body movements after they have shut their eyes. In order to built-up a lexical background, a student prepares several sets of short orthographic dictionaries that the students learn after the lessons. During the lessons, the students write down the words from said dictionaries while spelling them aloud. It is also possible to use an audio recording. After the lessons, the students also learn words from short orthographic, pronunciation, practical and philosophical dictionaries.

## Description

### The Technical Field

The Group of inventions is related to the field of light industry, demonstrational means and is intended to be used in the process of language teaching.

### The previous technical level

The previous known method of language teaching included the use of colored demonstrational means together wit the use of the colored background or words or parts of words printed in color (Patent of Germany No 2546974, cl. G 09B1/00, 1977) (1).

The above known method aims at promoting the formation of the vocabulary of students.

The methods described in the patent of the Great Britain No 2209862, cl. G 09B 1/00, 1989, (2) may also be employed for the promotion of formation of vocabulary in the process of language teaching.

Other demonstrational means may also be used in the process of language teaching, such as the use of images of moving objects (Patent of the Russian Federation No2110846, G 09B17/00, 1998) (3). The process of usage of the above known demonstrational means forms the vocabulary of students.

Another known method of language teaching aims at consideration of the level of knowledge of the group of students, based on the result of the questioning, which includes the use of demonstrational means (Patent of the Russian Federation No 2060559, G 09 B3/00, 1996) (4).

However this known method is based on the questioning of students together with the use of a special device, controlling the level of knowledge. Apart of the necessity of raising additional material funds for buying the device, it is necessary to state its low productivity as the questioning is based on the individual evaluation of each student. The immediate questioning of a large group of students with the help of this device is impossible.

The known method of language teaching includes oral delivery of information to the students, making written notes by the students, doing the individual control assignments by the students and monitoring of the written tests by the teacher (Patent of the Russian Federation No 2019890, C 09 B 7/02, 1990) (5).

The participation in the classes aims at the promotion of the vocabulary of students.

As per the above known method the control of the tests, written by the students is performed with the help of the special technical device.

However, this type of control of the knowledge of the students requires special equipment of the class with expensive technical means. Besides, in case the student is involved in the process of testing, he is intended to switch his attention to the work of the device, used for testing, while the teacher is inclined to stop his explanation of the new material. The result of the inevitable stops in the process of teaching for testing the students is the rapid lowering of the effectiveness of remembering the new material by the students. Due to the fact that normally the lesson lasts for 1-2 academic hours including a break and additionally is interrupted by the machinery control of the correctness of individual written exercises, the memory mechanisms are only partially mobilized, what tells negatively on the speed and quality of perception of the new material by the students.

The method of machinery control does not promote the effectiveness of perception of the new material or written exercises as well, no matter if it is being performed during the classes or after them as the period of time between the explanation of the teacher and the analysis of the results of the control of the written exercises is enlarged and the effectiveness of the perception of the new material lowers.

It the regular school practice that during the 1-2 academic hours the teacher is able to deliver a very small portion of the new material and the volume of the new information is very low, besides the teacher has to devote a huge portion of the rather short lesson to individual exercises of students, while they are informed of the results of their work only at the next class. The experience of most of the secondary schools reveals that 90% of tests written at the classes are handed back to the students only within 7-14 days after being actually written, what depends on the period of time between classes (the time-table). Not having received the immediate evaluation of personal written work, the student forgets the chain of thoughts during the class, the consistency of exercises performed, rules, used in the personal work and as a result loses interest in the process of studying. Additional intervals between the actual work performed and the assessment of the knowledge influence the process of perception of the material in a negative way. This regime of work enables the employment of the short-term memory of the students only, without transfening the knowledge, skills and abilities in the mode of long-term memory, what also negatively influences the process of language teaching.

Additionally, the above methods lack the description of the consistency of means employed to deliver the new information, new words, enlarging the vocabulary as well as the description of the means employed during the classes and after them.

### The description of the invention

The investigated method of language teaching and evaluation of the knowledge obtained consists of oral explanation of the new material to the students. The teacher demonstrates the colored demonstrational means and depicts them in color in the written form on the class blackboard. Such demonstrational means consist of the following elements: the background of the demonstrational means and the letters and/or words, and/or parts of words, and/or word combinations, and/or explanations, and/or punctuation marks, and/or numbers, and/or explanatory marks. The students reproduce the demonstrational means showed to them during the classes, moreover they reproduce the color of the demonstrated elements, and maker written notes in accordance with the oral explanation of the teacher or perform individual tasks. The explanation of the teacher and demonstration of the colored demonstrational means are alternated with the oral questioning and the checking of the correctness of the individual task completion.

The distinguishing peculiarity of the method under invention is that the major portion of the elements of the demonstrational means showed or written by the teacher is simultaneously reproduced by the students in one color, while certain elements are highlighted in a different color, and the new elements are highlighted with the still different color. The demonstrational means in color and the notes of the teacher's explanations are made by the students in one exercise book, while their individual assignments are done in another exercise book. One or several assistants to the teacher are present at the lesson to control the correctness of the fulfillment of the individual assignments. The process of education is not interrupted by the control of the correctness: the teacher continues explaining new material and demonstrating the colored demonstrational means, arid the students proceed making notes. Having observed a mistake in the student's notes the assistant marks the incorrect line or paragraph red and after receiving the exercise-book back the student finds the mistake himself, corrects it in red, writes the word correctly and circles it red.

It is expedient to color all elements on the demonstrational means blue or black, highlighted elements ― green, and new material ― red. It is also necessary for students to follow the suggested scheme when reproducing the material.

It is also recommended to color and/or write the information of the present time green, of the past ― yellow and of the future ― light blue. The lesson lasts for 2,5 ― 5 astronomic hours and during each hour the students may do several individual assignments.

Before the beginning of the oral questioning the teacher agrees with the students that certain gestures, expression, body movements might mean a certain answer to the teacher's question. The students answer the teacher's questions simultaneously with the help of gestures, expressions and body movements, keeping their eyes close.

The predicted method of formation of the vocabulary of the students in the process of language teaching includes the use of dictionaries as demonstrational means.

The distinguishing peculiarity of the predicated method of formation of vocabulary of students is that before the actual start of teaching the teacher produces a series of short orthographic dictionaries, distributes them among the students and before classes they study one or several of the dictionaries, read the words aloud, pronouncing each sound in accordance with spelling rules, and/or make the audio recording of their own voice. The students are writing the words during the classes discuss their pronunciation and/or notional meaning of the word, and/or examples of formation of different parts of speech, and/or mistakes occurred, and/or make word combinations with them, and/or make sentences. After classes the students review the contents of the dictionaries again.

The small dictionaries contain words related to the same grammar rule, or words belonging to the same part of speech, or words, containing similar mistakes, or words beginning with the same letter.

It is expedient to place the words in the dictionaries in columns.

The students read the words aloud, write them down pronouncing in accordance with their written form of transcription or write them down simultaneously listening to the audio recording of their own voice.

The process of pronouncing words while writing them should be controlled by the teacher.

During the repeated after classes investigation of the dictionaries used during the classes it is recommended that the students additionally use orphoephic, and/or etimological, and/or dictionary with definitions, and/or philosophical dictionaries while working with the words.

It is recommended to study the language in courses every day during 6-20 days. One lesson should last about 2,5 ― 5 astronomic hours without breaks. The work on the dictionaries should be performed on each lesson in 1 ― 10 steps each lasting 1 ― 15 minutes..

The technical result achieved during the realization of the present group of inventions is the intensification of the process of language teaching, efficiency of perception of the new information, the high speed of control over the efficiency of perception of the new material, rapid and multiple possibilities of correction of mistakes made by each individual student on each lesson, possibility of teaching a big group of students simultaneously together with the control over the perception of the new material, possibility of mobilization of both visual and associative memory of the students.

The present method intensifies the process of education due to mobilization of the visual memory in the course of work with the demonstrational means, colored in three colors intended to provide certain information.

The author's personal experience permits to state that absolutely similar texts, produced in black are reflected in student's memory more vaguely, than the ones printed in certain colors. The choice of colors is determined by the author's experience, obtained during many years of teaching.

The presence of the assistants provides the quick mistake observation and correction of mistakes without interrupting the process of teaching. The bigger the number of assistants, the larger number of students can be taught simultaneously. This also provides for the rapid observation of individual mistakes of each student.

The oral questioning with the use of gestures and/or expression, and/or body movements employed by the students provides an opportunity of a quick assessment of knowledge of each individual student no matter how big the audience is.

The author's personal experience permits to state that the immediate control right after the completion of the assignment mobilizes the mechanisms of both the long-term and the short-term memory, stimulates the efficiency of perception of the new material. In the presence of one or more assistants, having the possibility to immediately check the individual work of each student without interrupting the teacher's explanation and making notes by the students, the efficiency of memorization of the spelling improves. The use of red color by the teacher and the student mobilizes the visual and associative memory what sufficiently improves the results of memorization of the material.

The presence of several assistants improves the productivity of the process of language teaching and permits to enlarge the number of students.

The present method of formation of the vocabulary provides the effective memorization of the spelling of words, their sense, use of the new words in the written and oral speech.

The method of self dictating together with pronunciation in accordance with written transcription (spelling) minimizes the number of mistakes, mobilizes the audio memory, intensifies the process of promotion of the vocabulary.

The process of perception of the material by the students is greatly influenced by the possibility of having classes every day, lasting for a long period of time without breaks.

The predicated "Method of Teaching Languages" and "Method of Formation of Vocabulary of Students in the Process of Teaching Languages" meet the requirements of the criteria "novelty" as it contains new techniques that were never previously used in language teaching.

Both of the predicated methods meet the criteria "The Inventional Level" as they suggest the new techniques, their combinations and their new sequences.

Both of the predicated methods meet the criteria "Industrial Implementation" as they are easily produced and their production does not require complicated technological means.

### Brief Description of the Schemes

The schemes were employed to illustrate the invention of method of teaching Russian language.
Picture 1 depicts a demonstrational means, used for studying adjective.
Picture 2 depicts a demonstrational means, used for studying degrees of comparison of adjectives.
Picture 3 depicts a demonstrational means, used for studying participle.
Picture 4 depicts a demonstrational means, used for studying active and passive voice of present and past participles.
Picture 5 depicts a demonstrational means, used for studying gerund.
Picture 6 depicts a demonstrational means, used for studying numerals.
Picture 7 depicts a demonstrational means, used of studying adverb.
Picture 8 depicts a demonstrational means, used for studying pronoun.
Picture 9 depicts a demonstrational means, used for studying particles.
Picture 10 depicts a demonstrational means, used for studying spelling peculiarities that the students find difficult.
Picture 11 depicts a demonstrational means, used for studying conjunctions.
Picture 12 depicts a demonstrational means, used for studying introductory words and sentences.

### The Preferable Variants of Implementation of the Group of Inventions

Example 1. Starting explaining the new topic during teaching Russian students Russian language the teacher used the following scheme: the title of the new topic, new terms, spelling rules, etc. were demonstrated by the teacher on the class blackboard in red. The students wrote the new material in their exercise books in red either. As a result the intensification of memorizing the new terms, topics and rules was observed. The same effect was discovered when teaching foreign students Russian language as well. (ex., Picture 10, where particle 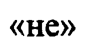 and words 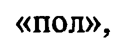 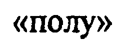 are printed in red color)

Example 2. When teaching Russian language to the Russian students the teacher used arbitrary explanatory signs and symbols: underlining flexions of plural nouns 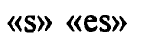 with a green line 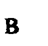 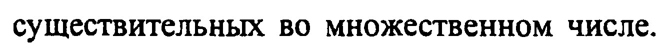 While the nouns were demonstrated by the teacher and written by the students in blue and black, the flexions 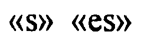 were written in red and underlined with a green line. As a result the red color was a kind of a signal to the students: 〈〈Remember", and the green color stressed the student's attention: "Pay special attention !". The rapid improvement of efficiency of perception of the new material was observed.

Example 3. When explaining the tenses of the verbs, the teacher demonstrated a green indoor plant and paid the students' special attention to the fact that the plant is green now, at the present moment, at the present time. After some time passes the plant's leaves will become yellowish and will die. They will become leaves in the past. This type of explanation created a stable association in the minds of the students: elements, demonstrated in the green color, give the information of the present time, while the ones in yellow ― about the past. Then the teacher reminded the students such figurative notions as 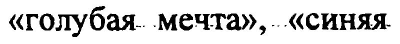 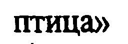 and explained that the blue color is associated with the future in many cultures of different nations. A stable association that the information represented in the blue color relates to the future. Even the first year schoolchildren who were not acquainted with such terms as "tense", "verb" did not find any difficulties in using the method of transferring information by means of color and employed it during the classes without mistakes. This method was easily assimilated by the foreign students learning Russian as well. (ex., Picture 4, where the new material is represented on a stand against the colored background: the upper leaves are colored green, while the lower ones ― yellow)

Example 4. When the students were taught the rules of writing the direct speech they were suggested to write the words in blue (or black), while the inverted commas, capital letters after the opening inverted commas, commas, dashes and colons - in red. When writing the material on the class blackboard the teacher used the white chalk (against the black background). It was discovered, that the effectiveness of the acquirement of the new material was 25 ― 30% higher than that of students, who were represented the new material in mono color: either only in white against the black background, or only in blue in the notes.

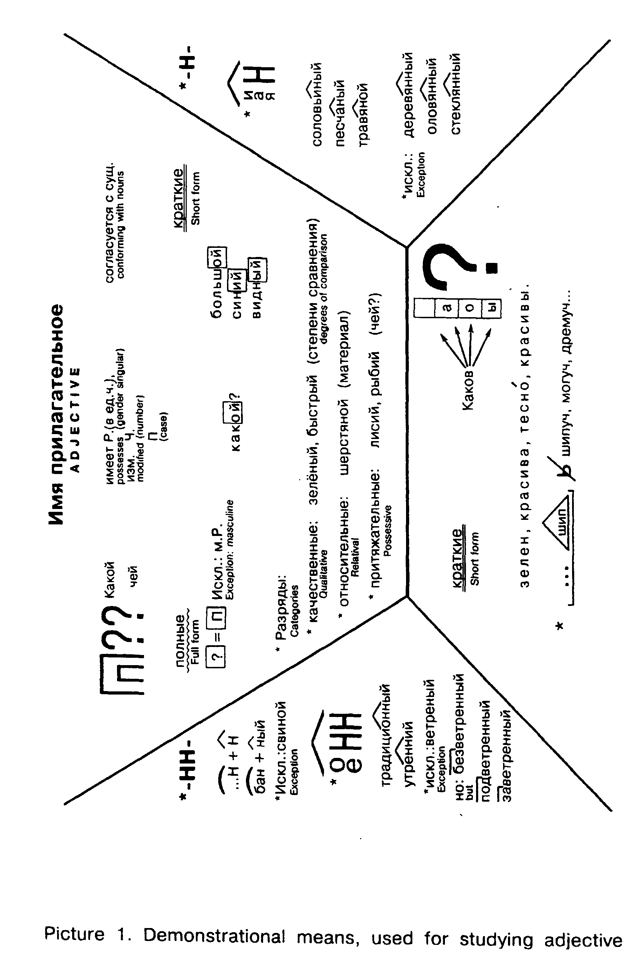

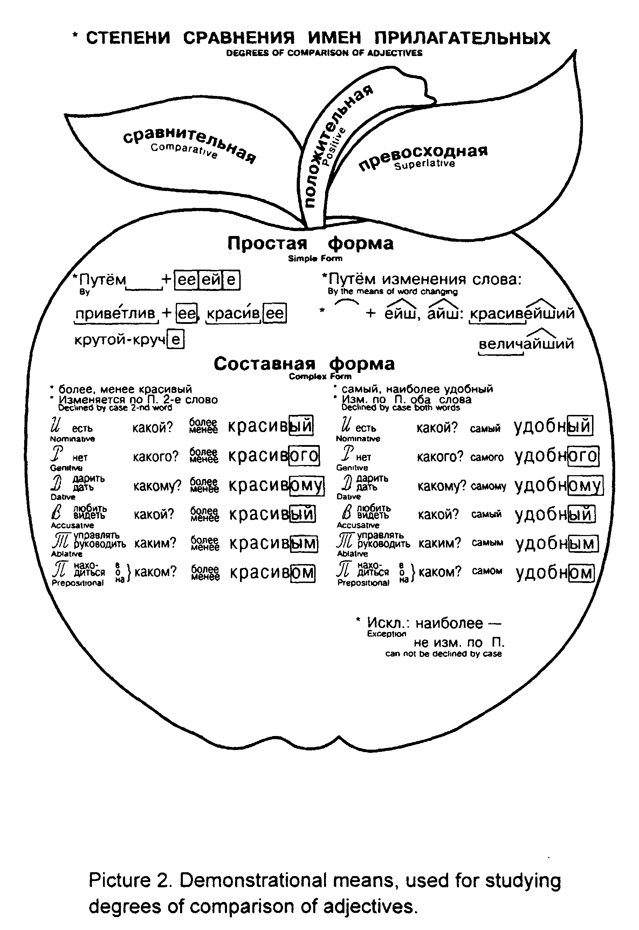

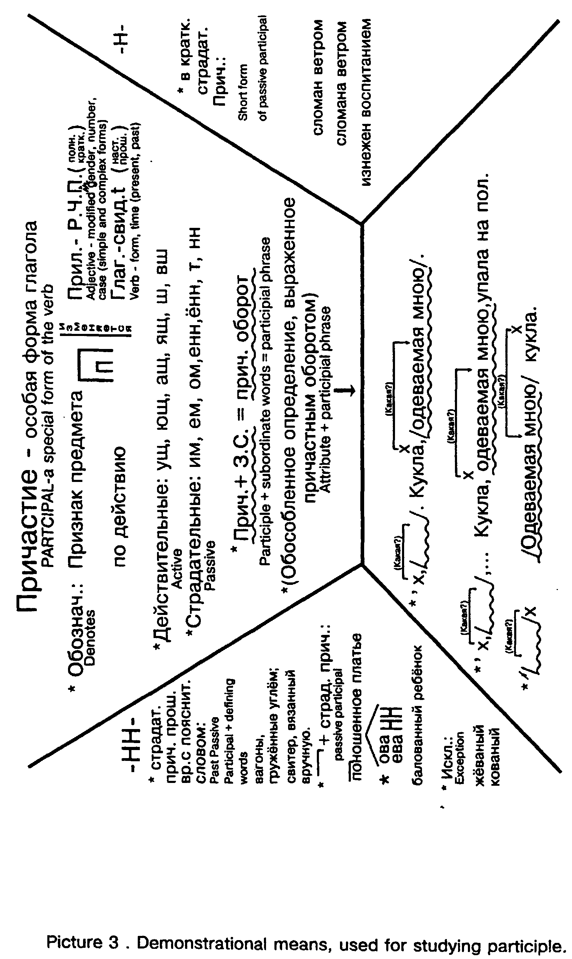

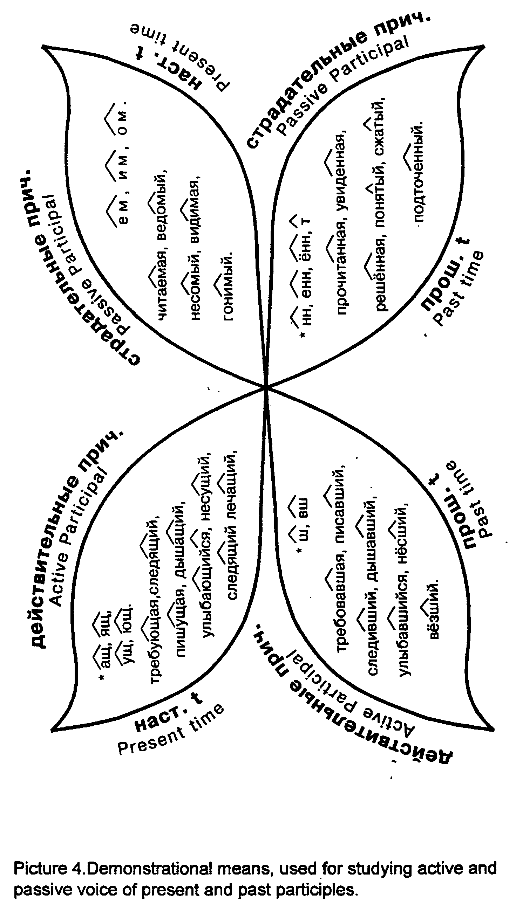

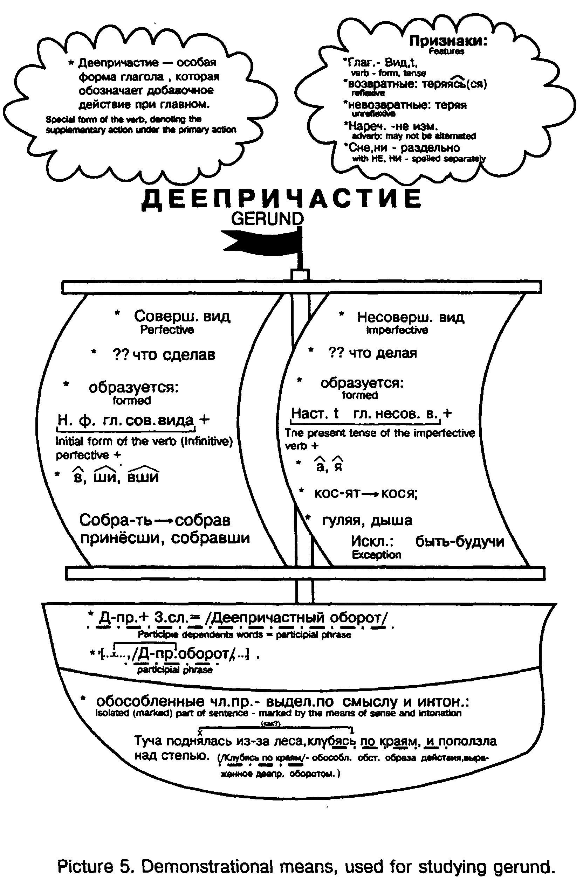

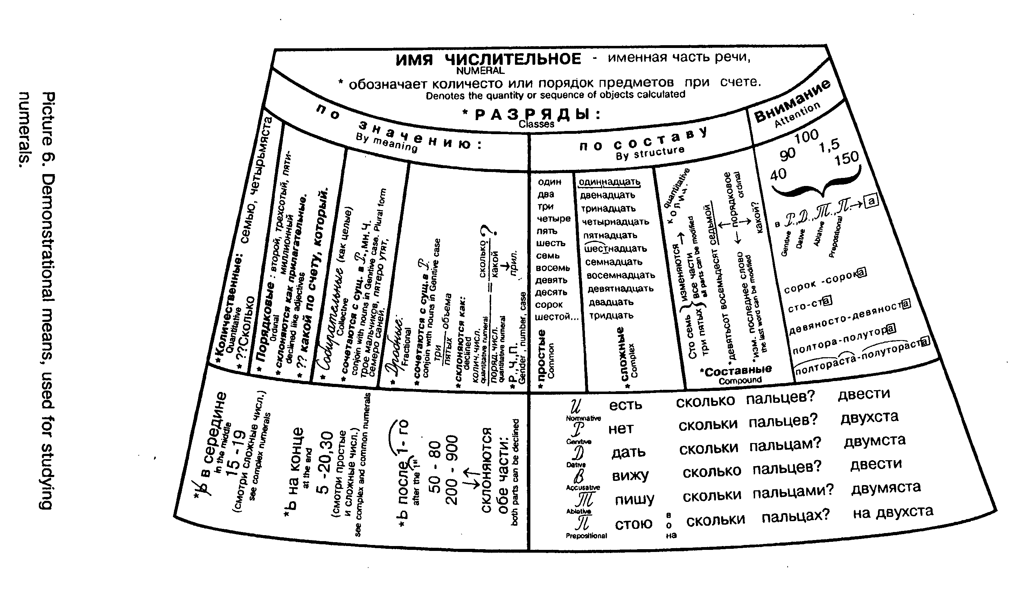

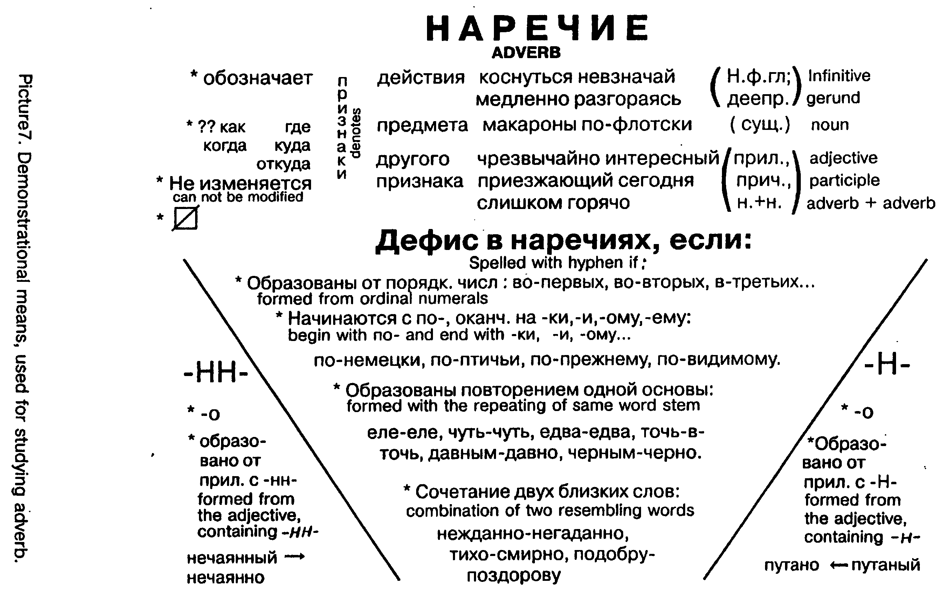

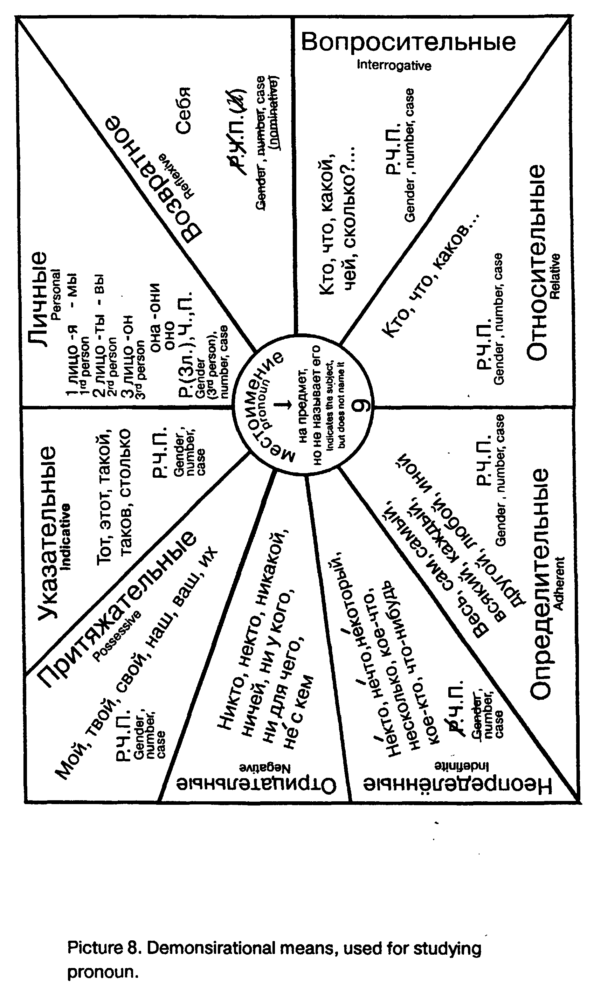

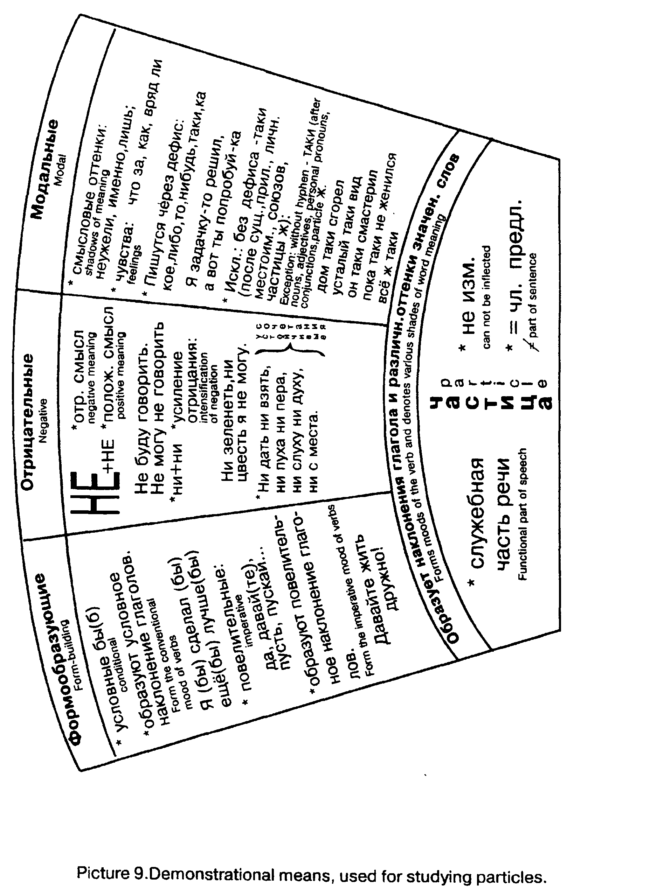

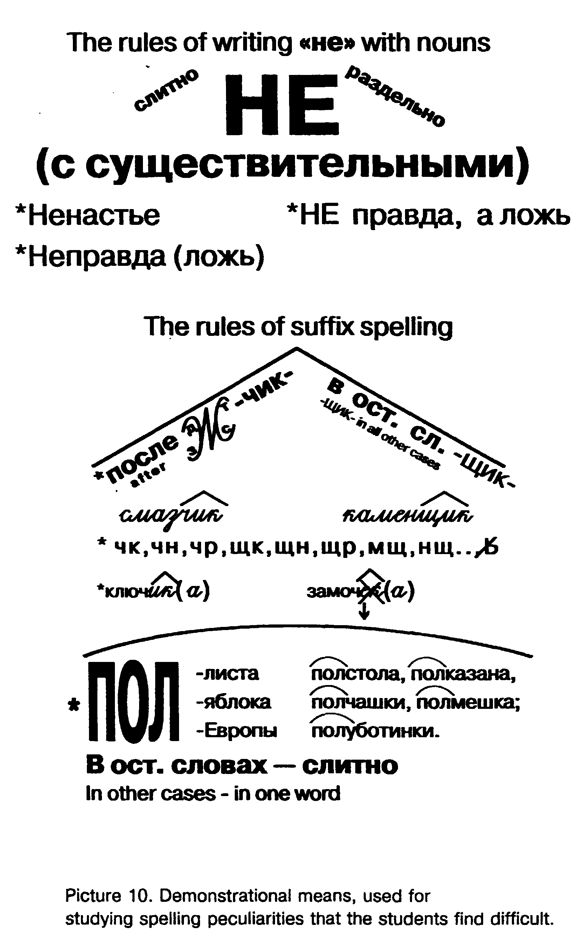

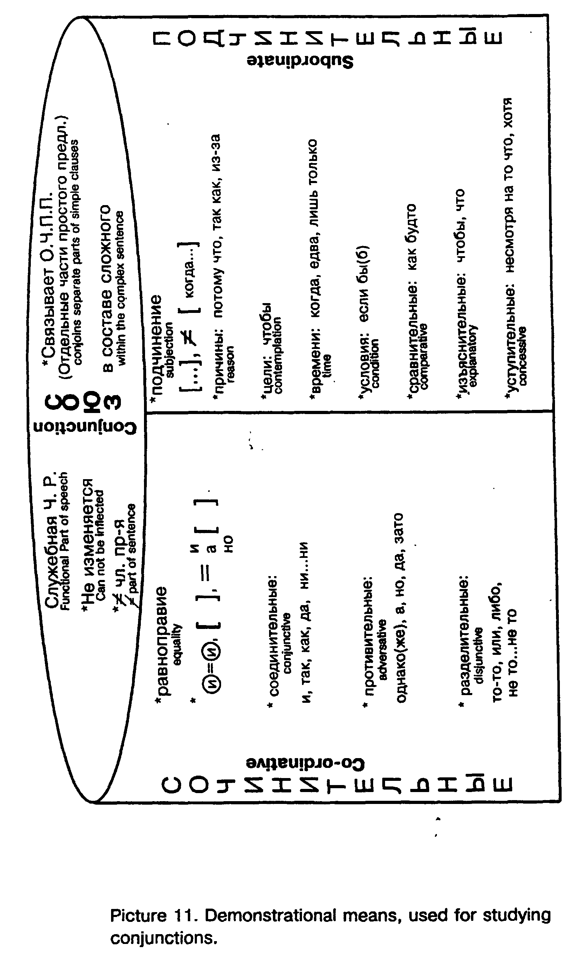

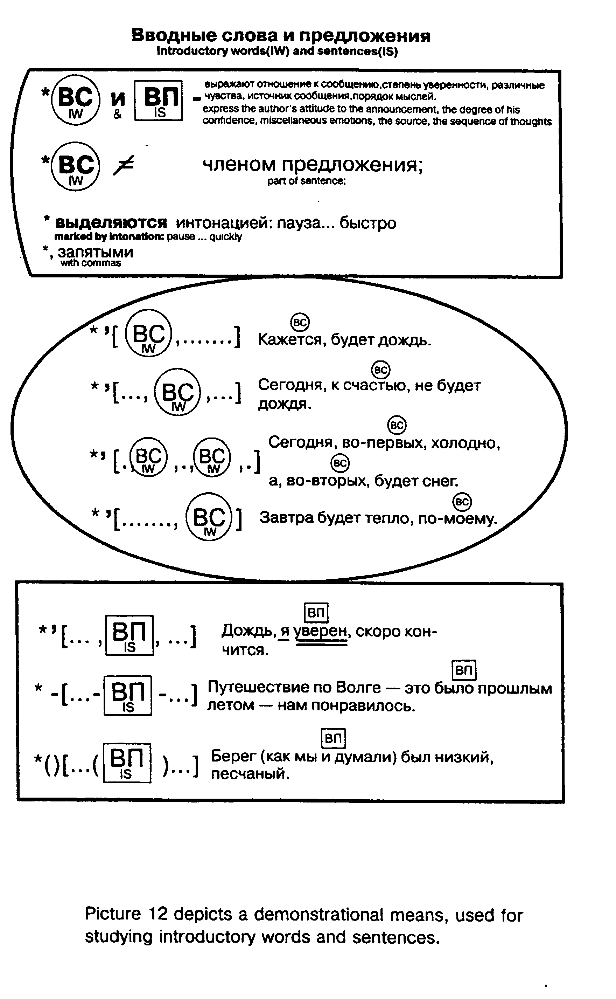

Example 5. The group of students consisting of 20 students was divided into two equal parts (10 students in each). Both of the groups were using the same explanatory notes: marked the prefixes with a line over the word, the border between the prefix and the base of the word was marked with a vertical line. The carnbered line was drawn under the base of the word, the suffix was marked with a broker line consisting of two corner-shaped elements. The flexions were marked with four lines, connected into a square (ex. Figure 1). The stem of the word was underlined with a sheer line, while the place of the beginning of the stem and its end was marked with sheer fractures.

### Example:

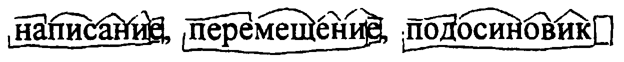

While all students wrote the words in blue or black color, the ones from the first group (the controlled group) were making the explanatory notes in blue and black either, and the students of the second group were making the notes in green color, that means "Pay special attention!". As a result the student of the second group learned the new material much faster, they were able to employ the new explanatory notes in practice, found no problem in marking out the stem of the word, suffixes and other parts of the words, while the students from the other group were not able to do that..

32 groups of students of different age (first year schoolchildren and graduates) were taught the regular school program within 2 weeks. The results of the test at the end of the course showed that the program was successfully learned. The duration of the daily classes was 2,5 ― 5 astronomic hours without breaks. In case the group consisted of 2 ― 10 students one assistant was present at the lesson, if the group was of 10 ― 20 students - 2 assistants, in case there were 20 ― 30 students in the group ― 3 assistants were helping the teacher. The individual works performed during the lesson were handed to the assistants. No corrections were made during the test, the assistant just marked red the line or the whole paragraph in which the mistake occurred. After being returned the exercise book with corrections made the student was supposed to find the mistake, correct it himself, write out the word and round it with a red line. The colored image of the correct spelling of the word was easily and permanently memorized by the student and therefore as a rule he never made the mistake later. It is noticeable that the students could stay at the class for quite a long period of time without a break and the requests to leave the class were very singular. After the course the students demonstrated a significant rise of the level of their literacy and were able to notice mistakes made by other students. Example 6. The teacher explains the rule of writing of 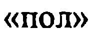 and 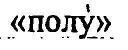 in Russian and agrees with the students that the gesture of a fist pressed together means "conjoint", while the pointed out indicatory finger means "to be written with a hyphen" The students close their eyes. The teacher pronounces: 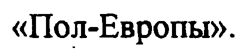 Students, who have pointed out the indicatory finger gave the correct answer. The fact that they keep their eyes closed guarantees that they "crib". Table 1 contains examples and correct gesture answers.

Example 7. The students are being taught the cases of capitalization in Russian. Preliminary the students and the teacher agree that the pointed out hand with a pointed out indicatory finger means "capital letter", while the cases in which the word is written with a small letter are denoted with the indicatory finger not pointed. The teacher says: 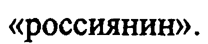 The right answer was given by the students who have pointed the indicatory finger down. The students keep their eyes closed.

Table 2 contain the results of the quiz.

Example 8. Table 3 contains the results of control of the parts of the world. The teacher pronounces the names of the cities and the students are supposed to indicate their relative position against Moscow. The correct gestures should be the following: indicatory finger up ― North, indicatory finger down ― South, indicatory finger right ― East, indicatory finger left ― West, North-East - indicatory finger up-right obliquely, North-West ― indicatory finger up-left obliquely, South-East ― indicatory finger down-right obliquely, South-West ― indicatory finger down-left obliquely. The students keep their eyes closed.

Example 9. After having explained the rules of writing some words conjoint and separate, the teacher agrees with the students that a handclap means "conjoint" while hands spread means "separate". Table 4 contains the results of the test.

Example 10. The group which was taught the intensive course of Russian language (the full school program taught within two weeks) consisted of children of the first school year up to the 9^{th} grade, moreover the children often experienced constant problems being taught Russian at school. Before the beginning of the first lesson the teacher distributed small dictionaries among the students. Each of the dictionaries consisted of 70 words beginning with letter "A". The students were supposed to read the words aloud, paying special attention to the sounds while pronouncing them, the way the word is spelt and then record their voice on a tape. Next day the children were again pronouncing the words out loud the way the word is spelt. For example the word 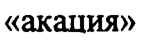 is pronounced 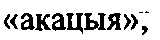 while it is accordingly spelt and pronounced out loud 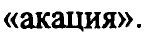 In case of the wrong pronunciation the teacher corrected the mistake. Then the students were writing a test, listened the audio recording of their own voice. This method provided them the ability to find mistakes in their audio recordings and correct them themselves. In case the mistake occurred, but was not noticed by the student. The teacher paid the student's special attention on that fact. The student mobilized and found the mistake.

Example 11. After having studied the small dictionaries at class, the students were instructed to work with etymologic dictionaries (trying to clear out the origin of the words) orphoepic dictionaries (were informed of the correct place of the stress in the word), explanatory dictionaries (making sure they realize the notional meaning of the word correctly or found out new notional meanings of the words), addressed the philosophic dictionary in case information contained in this dictionaries could be considered useful for understanding the notional meaning of the words.

Example 12. The group of students (consisting of 10 students) was subdivided into two subgroups 5 people in each. The students of the first group were not asked to pronounce the words they were writing aloud (the way they were spelled), or used their own audio recordings. When the 2 weeks' course was finished the teacher dictated 50 words out of 1000 learned during the course to the students of both groups. The students from the first group made all in all 24 mistakes, while the students from the second group did not make a single.

Example 13. The group of students who were taught the suggested two weeks' course were compared to a class of their age mates, who were not involved in the experiment and were not taught the above mentioned course and the comparison revealed that the pupils of the 1^{st} group are able to use the words from the small dictionaries in their colloquial speech, while their age mates who were not taught the advanced course of Russian language did not understand the notional meaning of 20% of these words and made spelling mistakes while writing them (the average percentage of mistakes was 27%), they found difficulties in making the exercises i.e. converse a word into another part of speech (example: 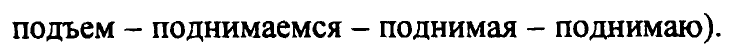 The students' vocabulary was enriched wit the words from the small dictionaries.

Example 14. The group of 15 students was taught the method under invention for one year. The classes were held not on a regular basis, but in accordance with the school timetable for 1 ― 2 academic hours per week. Each lesson the students worked with the small dictionaries, but this was once during the lesson and lasted for 5 minutes. After a year the students still made mistakes in the words from the small dictionaries and were not able to memorize them.

Thus the method under invention aims and succeeds in enriching the students' vocabulary and increases the overall literacy of the students.

### Industrial adaptibility

The claimed group of inventions can be employed in language teaching: the method does not require the use of expensive equipment or scarce demonstrational or any other means. The method is easy to understand, assimilate and reproduced.

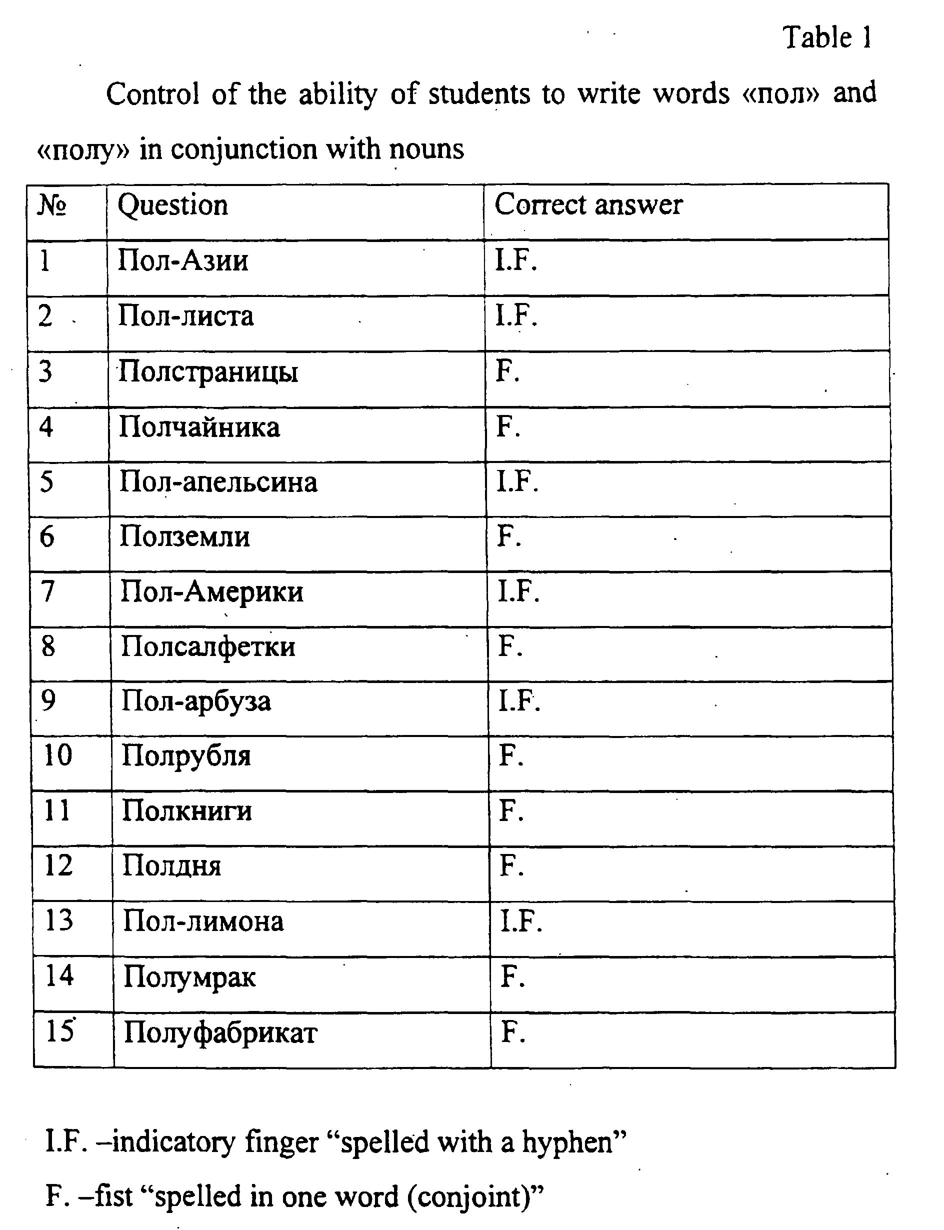

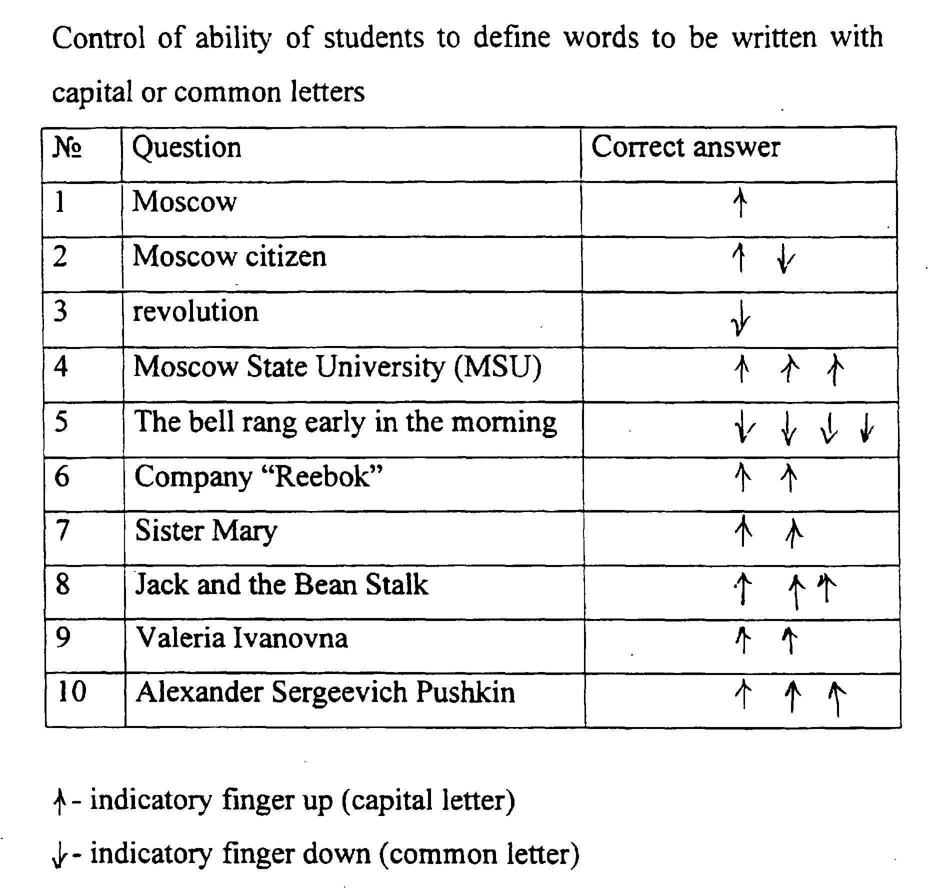

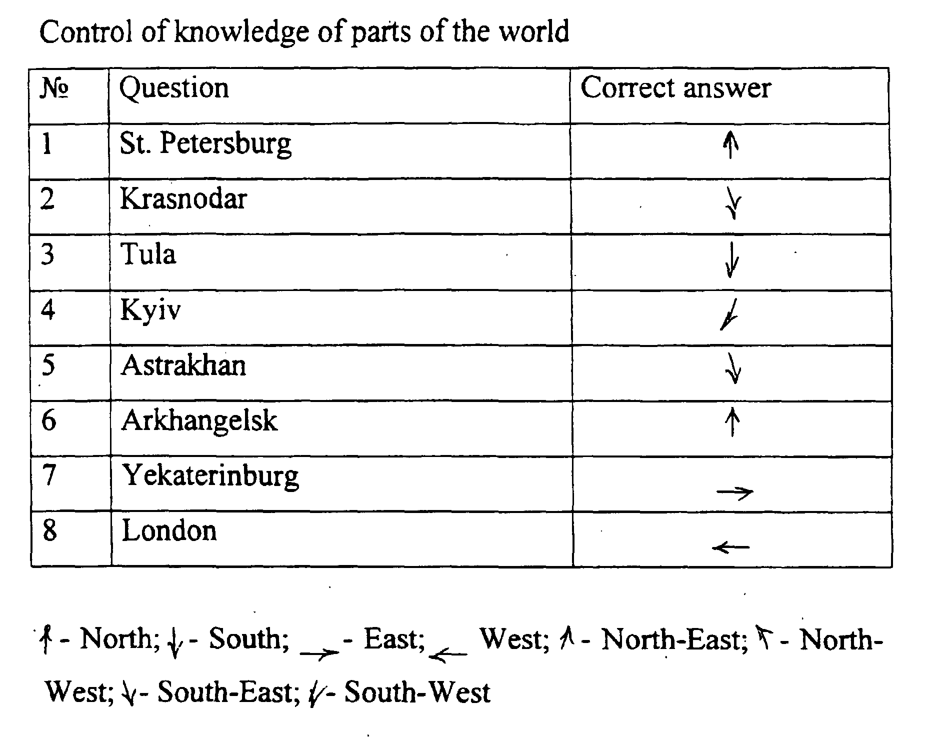

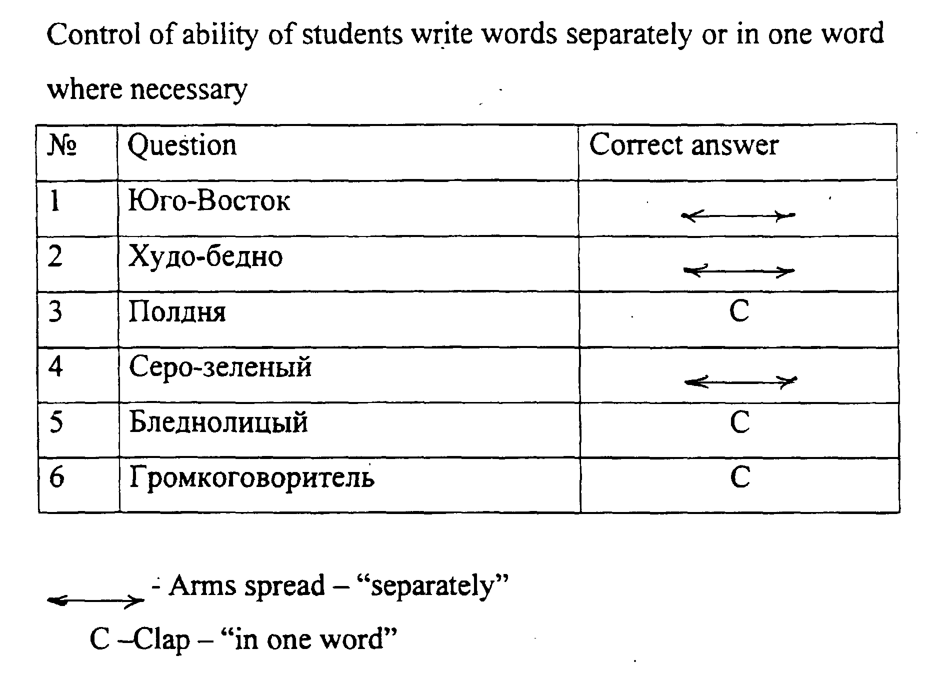

## Claims

1. Method of language teaching and assessment of the knowledge obtained by the students, including the oral explanation of the teacher, demonstration and/or written reproduction of the colored demonstrational means, containing miscellaneous elements such as its background and letters, and/or parts of words, and/or combinations of words, and/or sentences, and/or parts of sentences, and/or explanations, and/or punctuation marks, and/or numbers, and/or explanatory signs, making notes by the students and tests oral control of the knowledge and correction of their personal tests, with the major difference that most of the elements are performed/controlled/demonstrated in one color; while the marked elements are made in a different color, and the new elements (not familiar for the students are made in a still different color. The students are making notes and writing tests in two different notebooks, one or more assistants are performing the control on their work during the lesson, different gestures (including facial gestures and body movements).

2. In accordance with point 1 the method is different from others by the fact that the major part of the elements are demonstrated, and/or written in blue and/or black ink, while the marked elements are green and the elements that are new for the students are red.

3. Method in accordance with points 1 ― 2 varying from others in the fact that the information about the present time is demonstrated and/or written in green, while the information about past time is marked yellow and the future time is marked blue.

4. Method in accordance with pp 1 ― 3 discrepant from other methods in the fact that the assistant marks the line or the whole paragraph in which the mistake occurs while checking the tests or the written assignments of the students. The exercise book is handed back to the pupil after the correction, he finds and corrects the mistake himself, re-writes the word correctly. The assistant marks and the pupil corrects the mistake in red and marks the correct version of the word also red.

5. Method in accordance with pp 1 varying from the previously known methods in the fact that during the polling the pupils use previously agreed gestures and/or mime and/or body movements. The eyes of the pupils are closed.

6. Method in accordance with pp 1 ― 4 distinguishing from other known methods in the fact that during one lesson the pupil do several individual assignments. The lesson lasts for about 2 ― 2,5 astronomic hours.

7. Method of formation of vocabulary of the students in the process of language teaching, employing the use of miscellaneous demonstrational means, such as dictionaries, but different from other known methods in the fact that the teacher creates a series of orfographic dictionaries, that are distributed among the students before the classes and they study them, read words out loud, pronouncing each sound distinctly in accordance to the spelling, and/or make an audio recording of their own voice. The students are writing the familiar words at class, discuss their pronunciation, and/or spelling, and/or their structure, and/or grammar characteristics, and/or notional meaning of the words, and/or parameters of word information of formation of different parts of speech, and/or mistakes, that occurred in these words, and or make word combinations and/or sentences using these words; and afterwards re-read the dictionaries again after the classes.

8. Method in accordance with pp 7 varying from the previously known methods in the fact that the small dictionaries prepared by the teacher contains words that are illustrating the same grammar rule, or words belonging to the same part of speech, or words in which mistakes occurred, or words that start with the same letter.

9. Method in accordance with pp 7 ― 8 different from the previously known in the fact that the students read the words in the small dictionaries aloud. The words are located in a column.

10. Method in accordance with pp 7 ― 9 varying from the previously known by the fact that the students are dictating the words while writing, or use the audio recording of their own voice.

11. Method in accordance wit pp 7 ― 10 differing in the fact that the students pronounce the words while writing and this process is controlled by the teacher.

12. Method in accordance with pp 7 ― 10 differing from the previously known in the fact that when re-reading the small dictionaries again and again after classes the students get more information about the words from the orphoepic, and/or orfographic, and/or etimological and/or philosophic, and/or explanatory dictionaries.

13. Method in accordance with pp 7 ― 12 differing from the previously known in the fact that the classes are held every day in courses for about 6 ― 20 days. Each lesson lasts for 2,5 ― 5 astronomic hours. The work with the dictionaries takes place 1 ― 10 times per lesson and lasts 1 ― 15 minutes.
